# EUROPÄISCHE PATENTSCHRIFT

(11) **EP 0 579 590 B1**
(45) Veröffentlichungstag und Bekanntmachung des Hinweises auf die Patenterteilung: **28.02.1996**
(21) Anmeldenummer: 93890094.1
(22) Anmeldetag: 10.05.1993
(51) Int. Cl.: F02D 13/02, F01L 13/08, F01L 1/34

(54) **Zweitakt-Brennkraftmaschine**
Two stroke internal combustion engine
Moteur à deux temps

(30) Priorität: 17.07.1992 AT 1469/92
(43) Veröffentlichungstag der Anmeldung: 19.01.1994
(73) Patentinhaber: AVL Gesellschaft für Verbrennungskraftmaschinen und Messtechnik mbH.Prof.Dr.Dr.h.c. Hans List, A-8020 Graz (AT)
(72) Erfinder: List, Hans, Prof. Dipl.-Ing. Dr.Dr.h.c., A-8010 Graz (AT)
(74) Vertreter: Krause, Walter, Dr. Dipl.-Ing.

(56) Entgegenhaltungen:
- EP-A- 0 384 492
- EP-A- 0 427 334
- DE-C- 1 121 406
- GB-A- 1 040 805
- US-A- 3 144 749
- PATENT ABSTRACTS OF JAPAN vol. 12, no. 471 (M-773) 9. Dezember 1988 & JP-A-63 192 914 (GODO OZAWA) 10. August 1988

## Beschreibung

Die Erfindung betrifft ein Verfahren zur Auslaßventil-Steuerung einer Zweitakt-Brennkraftmaschine mit mindestens einem Zylinder, mindestens einer Einlaßöffnung bzw. Gruppe von Einlaßöffnungen und mindestens einem nockenwellengesteuerten Auslaßventil bzw. Gruppe von Auslaßventilen pro Zylinder, sowie mit einem Abgasturbolader zur Verdichtung der Ansaugluft, wobei in Abhängigkeit von Last und/oder Drehzahl der Brennkraftmaschine die Steuerzeit des Auslaßventiles bzw. der Gruppe von Auslaßventilen nach früh verstellt wird.

Zweitakt-Brennkraftmaschinen, insbesondere Dieselbrennkraftmaschinen, werden aufgrund ihres günstigen Leistungsgewichtes sowie ihrer kompakten Bauweise wieder vermehrt in unterschiedlichsten Anwendungsgebieten eingesetzt. Um eine ähnliche Energiebilanz wie bei Viertakt-Motoren zu erhalten, muß jedoch die Abgasenergie des Zweitakt-Motors durch Lader, wie z.B. Turbolader oder ähnliche zumindest zum Teil zurückgewonnen werden.

Bei Aufladung eines Zweitakt-Motors ist jedoch die Startwilligkeit und der Betrieb des Motors bei niederen Drehzahlen aufgrund der bei dieser Drehzahl zu geringen Förderung von Luft durch den Lader problematisch.

Aus der EP-PS 0 192 796 ist eine Brennkraftmaschine bekannt, bei der zur Erhöhung der Leistung des Abgasturbolader bei niedriger Last und/oder Drehzahl der Brennkraftmaschine der Öffnungsbeginn nach früh verstellt wird, sodaß ein vorbestimmter Druck in der verdichteten Verbrennungsluft nicht unterschritten wird. Die Regelung des Öffnungsbeginnes erfolgt allerdings ausschließlich in Abhängigkeit vom Ladedruck, sodaß nicht alle Betriebspunkte des Motors bei unterschiedlicher Drehzahl erfaßt werden können. Maßnahmen zur Verbesserung des Ansprechverhaltens des Laders in der Startphase sind keine vorgesehen.

Die US-PS 3 144 749 offenbart eine Zweitakt-Brennkraftmaschine mit Abgasturbolader und Auslaßventil, dessen Schließzeitpunkt bei höherer Ladung nach Spät im Bereich von 270° Kurbelwinkel verstellt wird, um durch Verkürzung des Kompressionshubes die Kompressionstemperatur bei höherer Last zu vermindern. Eine Verstellung der Steuerzeit in einem Ausmaß, welche einen Kompressorbetrieb der Brennkraftmaschine in der Startphase erlauben würde, ist nicht vorgesehen.

Weiters ist aus der DE-PS 39 42 032 eine durch einen mechanischen Lader aufgeladene Brennkraftmaschine mit einem Auslaßschlitz und einem Einlaßschlitz bekannt, bei der im Spülkanal, sowie im Abgaskanal variabel gesteuerte Drehschieberventile vorgesehen sind, wobei der Öffnungszeitpunkt des Abgasdrehschieberventils bei geringer Drehzahl und geringer Last auf einen Zeitpunkt verzögert wird, der später liegt als der Auslaßschlitz sich öffnet. Dadurch wird eine Vergrößerung des wirksamen Arbeitshubes und eine Leistungssteigerung im niedrigen Drehzahlbereich erreicht. Bei hoher Drehzahl und hoher Last fällt der Öffnungszeitpunkt dagegen im wesentlichen mit der Öffnung des Auslaßschlitzes zusammen. Durch die Auslaßschlitzsteuerung lassen sich die Steuerzeiten des Auslaßventiles nur in einem relativ kleinen Kurbelwinkel beeinflussen.

Aus der DE-PS 27 01 272 ist ein mit Vorverdichtung arbeitender Zweitakt-Dieselmotor bekannt geworden, welcher in seinem Zylinderkopf wenigstens ein Einlaß- und ein Auslaßventil zur Realisierung einer Umkehrspülung aufweist. Das System zur Vorverdichtung umfaßt einen Turbokompressor mit hohem Druckverhältnis, welcher durch eine mit den Auspuffgasen des Motors betriebene Turbine angetrieben wird. Ein weiterer Kompressor, beispielsweise ein Roots-Kompressor, liegt zwischen dem Ausgang des Turbokompressors und dem Einlaßstutzen des Motors.

Ferner ist aus der Buchreihe Verbrennungskraftmaschine Band 11 mit dem Titel "Aufbau der raschlaufenden Verbrennungskraftmaschinen". Springerverlag 1964, Abb. 252b, Seite 489, eine längsgespülte Zweitakt-Brennkraftmaschine mit Einlaßschlitzen und Auslaßventilen bekannt geworden, welche über ein Roots-Gebläse aufgeladen wird.

Aufgabe der Erfindung ist es, das Ansprechverhalten des Laders bei Start und Teillast auf möglichst einfache Weise zu verbessern.

Diese Aufgabe wird erfindungsgemäß dadurch gelöst, daß die Steuerzeit des Auslaßventiles bzw. der Gruppe von Auslaßventilen während der Startphase von einer Normalposition für den optimalen Motorbetrieb bei der jeweiligen Last und/oder Drehzahl in eine Startposition im Bereich des oberen Totpunktes für die Startphase verstellt wird, so daß die Brennkraftmaschine in der Startphase als Kompressor arbeitet und den Lader auf seine für den Motorbetrieb erforderliche Mindestdrehzahl bringt, und daß nach der Startphase die Steuerzeit von einer Normalposition für den optimalen Motorbetrieb bei Vollast in eine vorverstellte Position für den optimalen Motorbetrieb bei der jeweiligen Teillast und/oder Drehzahl verstellt wird, wobei die Größe der Vorverstellung in Grad Kurbelwinkel mit der Drehzahl zunimmt. Der Turbolader wird somit in der Startphase ohne Einspritzung auf eine bestimmte Mindestdrehzahl gebracht, wobei nach Rückstellung der Steuerzeiten auf Normalbetrieb und Zuschalten der Einspritzung die Brennkraftmaschine und der Lader optimal aufeinander abgestimmt laufen. Zusammen mit der von der Drehzahl abhängigen Vorverstellung der Steuerzeit des Auslaßventiles im Motorbetrieb ist gewährleistet, daß die Turbine bei allen Betriebszuständen der Brennkraftmaschine ausreichend Energie bekommt, damit der Verdichter die für den Spülvorgang notwendige Luftmenge liefern kann. Dies wird besonders dann erreicht, wenn im Motorbetrieb das Maximum der Vorverstellung der Steuerzeit des Auslaßventiles bei der jeweiligen Drehzahl im Teillastbereich zwischen 1/3 bis 2/3 der Vollast liegt.

Eine Ausführungsvariante der Erfindung sieht vor, daß die Verstellung der Steuerzeiten des Auslaßventiles bzw. der Gruppe von Auslaßventilen während der Startphase durch Verdrehen bzw. Verschieben zumindest einer Nockenwelle oder zumindest eines Nockens der Nockenwelle von einer Normalposition für den optimalen Motorbetrieb bei der jeweiligen Last und/oder Drehzahl in eine Startposition für die Startphase erfolgt.

Zur Übergangslosen Vorverstellung der Steuerzeiten im Motorbetrieb ist vorgesehen, daß die Verstellung der Steuerzeiten des Auslaßventiles bzw. der Gruppe von Auslaßventilen nach der Startphase durch Verdrehen zumindest einer Nockenwelle oder zumindest eines Nockens der Nockenwelle von einer Normalposition für den optimalen Motorbetrieb bei Vollast in eine vorverstellte Position für den optimalen Motorbetrieb bei der jeweiligen Teillast und/oder Drehzahl stufenlos erfolgt.

Um einerseits im Motorbetrieb eine wirksame Vorverstellung der Steuerzeiten des Auslaßventiles zu erreichen und andererseits den Kompressorbetrieb während der Startphase zu ermöglichen, sollten die Steuerzeiten in einem Bereich von etwa 0° bis 180° Kurbelwinkel verstellt werden.

Erfindungsgemäß sind zur Realisierung einer Längsspülung die Einlaßöffnungen als vom Kolben der Brennkraftmaschinen gesteuerte Einlaßschlitze ausgeführt, wobei die Gruppe der Auslaßventile zwei Untergruppen umfaßt und jede dieser Untergruppen von jeweils einer Nockenwelle betätigbar ist. Während der Startphase wird zumindest ein Auslaßventil in seiner Steuerzeit variiert.

In einer äußerst vorteilhaften Ausführungsvariante der Erfindung sind insgesamt vier Auslaßventile vorgesehen, welche paarweise von zwei Nockenwellen betätigbar und symmetrisch um die Position einer Einspritzdüse angeordnet sind. Ein weiterer Vorteil liegt darin, daß die vier Auslaßventile parallel zur Zylinderachse angeordnet werden können und die Achse der Einspritzdüse mit der Zylinderachse zusammenfällt. Diese Ausführungsvariante zeichnet sich durch beste Spülergebnisse (Längsspülung) und gute Einspritzbedingungen durch die zentral angeordnete Einspritzdüse aus. Durch den großen Auslaßquerschnitt der vier Auslaßventile wird ein rascher Ladungswechsel gewährleistet, wobei alle Auslaßkanäle zu einem Auslaßsammler zusammengefaßt und zur Rückgewinnung der Auspuffenergie mit dem Turbolader in Verbindung stehen.

Erfindungsgemäß besteht dabei die Möglichkeit, daß die Steuerzeiten der beiden Untergruppen von Auslaßventilen durch gleich- oder gegensinniges Verdrehen bzw. Verschieben von zwei obenliegenden Nockenwellen variiert werden.

Das erfindungsgemäße Konzept läßt auch die Realisierung einer Zweitakt-Brennkraftmaschine mit Umkehrspülung zu, wobei eine Gruppe von Einlaßventilen und eine Gruppe von Auslaßventilen vorgesehen ist und für die Startphase zumindest ein Auslaßventil und ein Einlaßventil in seiner Steuerzeit variiert werden.

Schließlich können in einer Weiterbildung dieser Ausführungsvariante zwei Einlaßventile und zwei Auslaßventile vorgesehen sein, welche von je einer Nockenwelle betätigbar und im wesentlichen symmetrisch um die Position einer Einspritzdüse angeordnet sind.

Die Erfindung wird im folgenden anhand von Ausführungsbeispielen näher erläutert. Es zeigen:
- Fig. 1: eine erfindungsgemäße Brennkraftmaschine in schematischer Darstellung,
- Fig. 1a und Fig. 2: Ausführungsvarianten der Erfindung,
- Fig. 3a, 3b, 4a und 4b: Diagramme zur Beschreibung der Steuerzeiten in der Start- und in der Normalbetriebsphase der Brennkraftmaschine,
- Fig. 5 und 6: Ventilhubdiagramme in Abhängigkeit des Kurbelwinkels, sowie
- Fig. 7: ein Last/Drehzahl Kennfeld mit eingezeichneten Bereichen der Steuerzeit-Vorverstellung.

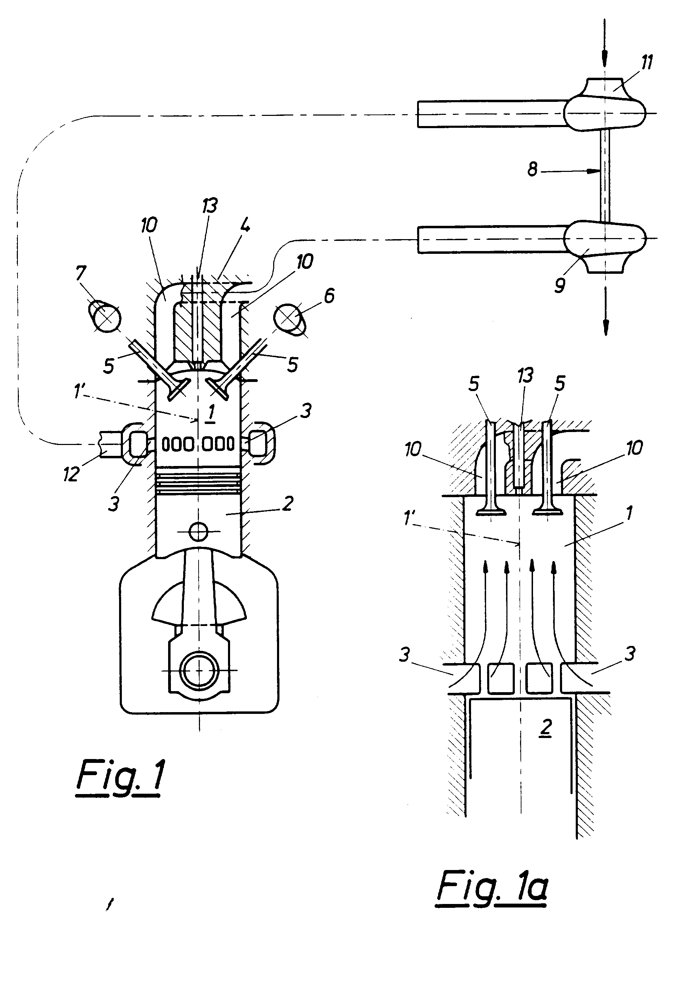

Die in Fig. 1 dargestellte Zweitakt-Brennkraftmaschine, beispielsweise eine Dieselbrennkraftmaschine, weist einen Zylinder mit vom Kolben 2 gesteuerten Einlaßschlitzen 3 auf. Im Zylinderkopf 4 sind vier Auslaßventile 5 (zwei davon sichtbar) zu zwei Untergruppen zusammengefaßt, welche jeweils von einer Nockenwelle 6, 7 betätigbar sind. Die Steuerzeiten der Auslaßventile 5 bzw. einer Untergruppe von Auslaßventilen 5 sind derart variierbar, daß die Brennkraftmaschine in der Startphase als Kompressor für einen Lader 8, z.B. einem Abgasturbolader, arbeitet. Die Turbine 9 des Turboladers steht mit den Auslaßkanälen 10 in Verbindung und der Verdichter 11 mit den zu den Einlaßschlitzen 3 führenden Einlaßkanal 12.

Bei der dargestellten Ausführungsvariante einer Brennkraftmaschine mit Längsspülung sind die vier Auslaßventile 5 symmetrisch um die Einspritzdüse 13 angeordnet und garantieren einen äußerst raschen Ladungswechsel. Das erfindungsgemäße Prinzip läßt sich jedoch auch für eine andere Zahl von Auslaßventile bzw. für eine andere Anordnung der Auslaßventile realisieren, solange die Steuerzeit zumindest eines Auslaßventiles entsprechend variiert werden kann.

Bei der Ausführungsvariante nach Fig. 1a sind die vier Auslaßventile 5 parallel zur Zylinderachse 1' angeordnet. Die Achse der Einspritzdüse 13 fällt mit der Zylinderachse 1' zusammen.

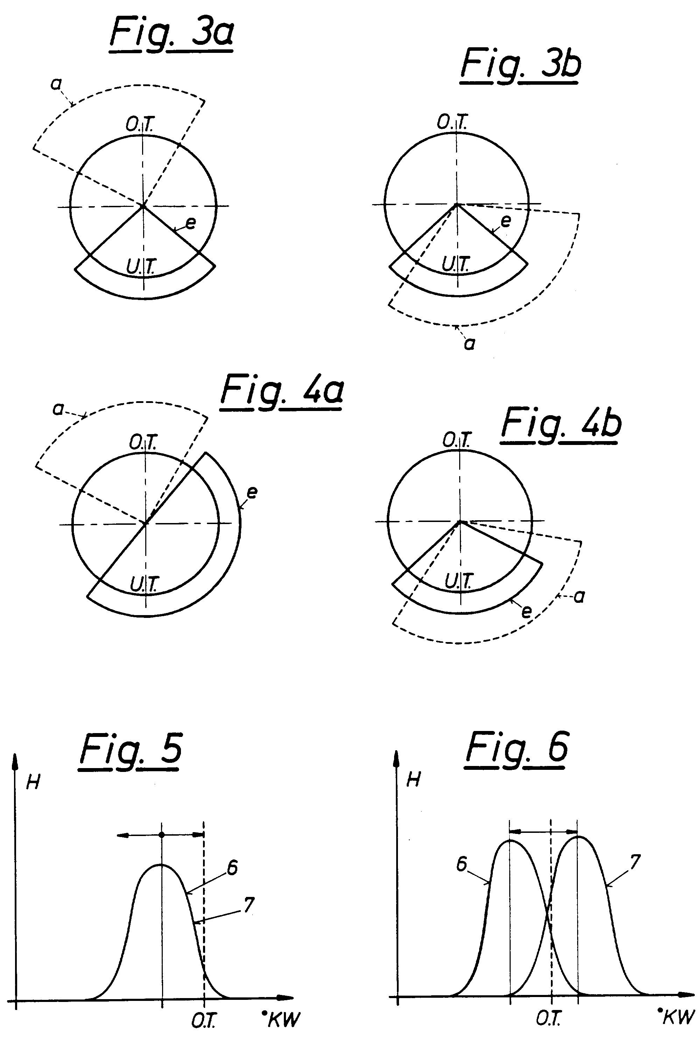

Für die in den Fig. 1, 1a dargestellten Ausführungsvarianten zeigen die Fig. 3a (Startphase) und 3b (Normalbetrieb) mögliche Steuerzeiten, wobei jeweils mit OT und UT der obere und untere Totpunkt des Kolbens bezeichnet wird. Strichliert ist der Öffnungsbereich a des bzw. der Auslaßventile und durchgehend liniert der öffnungsbereich e der Einlaßschlitze dargestellt. Der in Fig. 3b eingezeichnete Öffnungsbereich entspricht der Standard-Steuerzeit bei Vollast. Man erkennt, daß der Öffnungsbereich a der Auslaßventile in der Startphase verkürzt und in dem Bereich des OT verdreht ist. Die Änderung der Steuerzeiten kann durch Verdrehen bzw. Verschieben einer oder beider Nockenwellen bzw. eines oder mehrerer Nocken der Nockenwelle realisiert werden, was weiter unten anhand der Fig. 5 und 6 näher beschrieben wird.

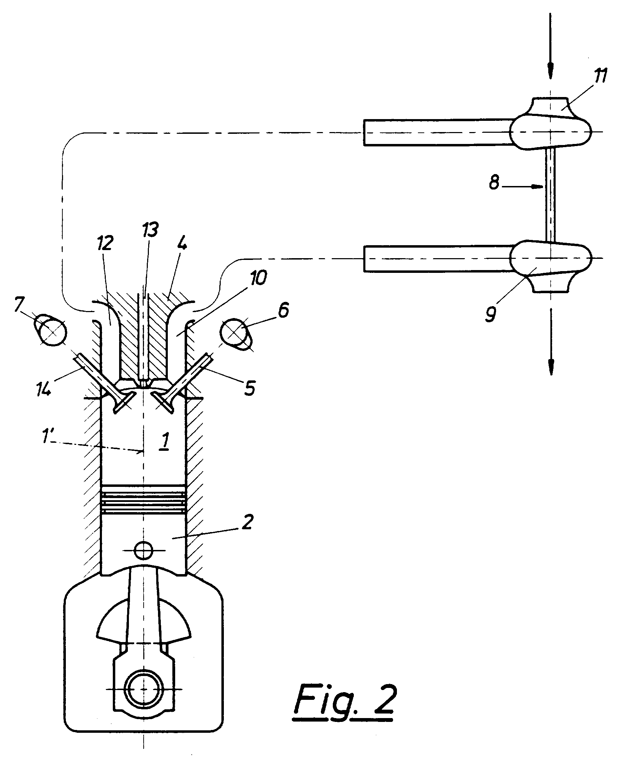

Die Ausführungsvariante nach Fig. 2 unterscheidet sich von jener nach Fig. 1 bzw. Fig. 1a dadurch, daß im Zylinderkopf 4 zur Realisierung einer Umkehrspülung eine Gruppe von Einlaßventilen 14 und eine Gruppe von Auslaßventilen 5 vorgesehen ist, welche von zwei obenliegenden Nockenwellen 6 und 7 betätigt werden. Bei dieser Variante können sowohl die Steuerzeiten der Einlaßventiln 14 als auch jene der Auslaßventile 5 variiert werden, wodurch auch eine Brennkraftmaschine mit Umkehrspülung in der Startphase als Kompressor für den Lader 8 verwendet werden kann. Die Steuerzeiten für diese Ausführungsvariante sind in den Fig. 4a (Startphase) und 4b (Normalbetrieb) dargestellt. Gegenüber den Verhältnissen bei Normalbetrieb ist der Öffnungsbereich a der Auslaßventile in der Startphase verkürzt und in den Bereich des OT verdreht, der Öffnungsbereich e der Einlaßventile hingegen ist verlängert und ebenfalls in Richtung OT verdreht.

In den Fig. 5 und 6 ist jeweils der Ventilhub einer Gruppe von Auslaßventilen über dem Kurbelwinkel dargestellt. In Fig. 5 werden beispielsweise beide Nockenwellen 6 und 7 um den gleichen Betrag gleichsinnig verdreht, sodaß es zu einer Verschiebung der Öffnungszeit kommt, wobei jedoch die Öffnungsdauer gleich bleibt.

In Fig. 6 hingegen werden die beiden Nockenwellen 6 und 7 gegensinnig verdreht, sodaß die davon betätigten Ventilgruppen bzw. Ventile zu unterschiedlichen Zeiten öffnen und schließen. Es kommt dadurch zu einer Verlängerung der Öffnungsdauer. Beide Effekte (gemäß Fig. 5 und Fig. 6) können auch überlagert werden, sodaß die Gesamtöffnungszeit gleichzeitig verschoben und verlängert wird.

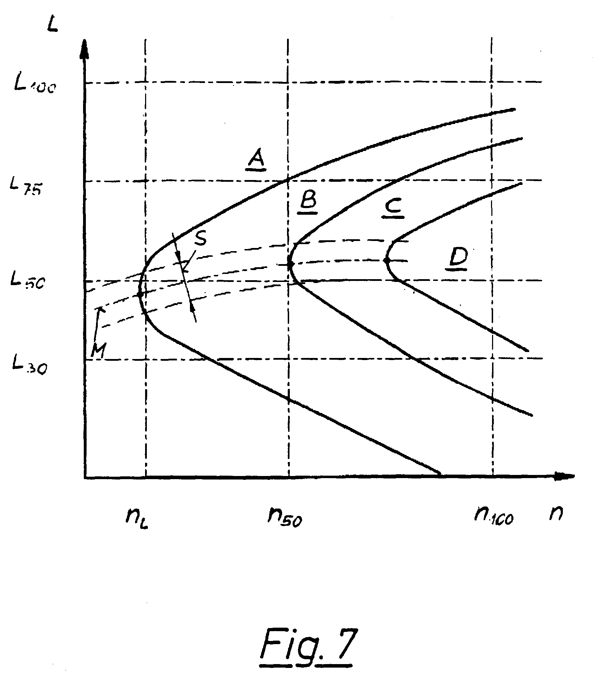

Im in Fig. 7 ersichtlichen Beispiel eines Kennfeldes einer Zweitakt-Brennkraftmaschine ist für jede Last L und Drehzahl n die zugehörige Vorverstellung der Steuerzeit des Auslaßventiles dargestellt. Die eingezeichneten Muschelkurven symbolisieren die Bereiche der Vorverstellung. n₁₀₀ entspricht der Nenndrehzahl, n₅₀ der halben Nenndrehzahl und n_{L} der Leerlaufdrehzahl. Im Kennfeld ist weiters der Vollastbereich mit L₁₀₀, sowie die Teillastbereiche bei 30%, 50% bzw. 75% der Vollast L₁₀₀ mit L₃₀, L₅₀ bzw. L₇₅ bezeichnet. Der Bereich A bezieht sich auf die Standard-Steuerzeit, beispielsweise bei Vollast L₁₀₀ und Nenndrehzahl n₁₀₀, Bereich B deutet eine bis etwa 15° Kurbelwinkel gegenüber der Standard-Steuerzeit, Bereich C eine zwischen etwa 15° und etwa 20° Kurbelwinkel vorverstellte Steuerzeit an.

Im Bereich D ist die Steuerzeit zwischen etwa 20° und etwa 25° Kurbelwinkel vorverstellt. Um jeden Motorbetriebspunkt abdecken zu können, sind stetige Bereichsübergänge, sowie ein kontinuierliches Ansteigen der Vorverstellung innerhalb eines Bereiches vorteilhaft.

Wie in Fig. 7 gezeigt, liegt das Maximum der Vorverstellung bei der jeweiligen Drehzahl, durch die strichpunktiert eingezeichnete Linie M verdeutlicht, innerhalb eines strichliert angedeuteten Steuerbereiches S von etwa ± 3° Kurbelwinkel im Bereich der Vollast.

## Patentansprüche

1. Verfahren zur Auslaßventil-Steuerung einer Zweitakt-Brennkraftmaschine mit mindestens einem Zylinder (1), mindestens einer Einlaßöffnung bzw. Gruppe von Einlaßöffnungen (3, 14) und mindestens einem nockenwellengesteuerten Auslaßventil bzw. Gruppe von Auslaßventilen (5) pro Zylinder (1), sowie mit einem Abgasturbolader (8) zur Verdichtung der Ansaugluft, wobei in Abhängigkeit von Last und/oder Drehzahl der Brennkraftmaschine die Steuerzeit des Auslaßventiles bzw. der Gruppe von Auslaßventilen (5) nach früh verstellt wird, **dadurch gekennzeichnet**, daß die Steuerzeit des Auslaßventiles bzw. der Gruppe von Auslaßventilen (5) während der Startphase von einer Normalposition für den optimalen Motorbetrieb bei der jeweiligen Last und/oder Drehzahl in eine Startposition im Bereich des oberen Totpunktes (OT) für die Startphase verstellt wird, so daß die Brennkraftmaschine in der Startphase als Kompressor arbeitet und den Lader (8) auf seine für den Motorbetrieb erforderliche Mindestdrehzahl bringt, und daß nach der Startphase die Steuerzeit von einer Normalposition für den optimalen Motorbetrieb bei Vollast in eine vorverstellte Position für den optimalen Motorbetrieb bei der jeweiligen Teillast und/oder Drehzahl verstellt wird, wobei die Größe der Vorverstellung in Grad Kurbelwinkel mit der Drehzahl zunimmt.

2. Verfahren nach Anspruch 1, **dadurch gekennzeichnet**, daß im Motorbetrieb das Maximum der Vorverstellung der Steuerzeit des Auslaßventiles (5) bei der jeweiligen Drehzahl im Teillastbereich zwischen 1/3 bis 2/3 der Vollast liegt.

3. Verfahren nach Anspruch 1 oder 2, **dadurch gekennzeichnet**, daß die Verstellung der Steuerzeiten des Auslaßventiles bzw. der Gruppe von Auslaßventilen (5) während der Startphase durch Verdrehen oder Verschieben zumindest einer Nockenwelle (6, 7) oder zumindest eines Nockens der Nockenwelle (6, 7) von einer Normalposition für den optimalen Motorbetrieb bei der jeweiligen Last und/oder Drehzahl in eine Startposition für die Startphase erfolgt.

4. Verfahren nach einem der Ansprüche 1 bis 3, **dadurch gekennzeichnet,** daß die Verstellung der Steuerzeiten des Auslaßventiles bzw. der Gruppe von Auslaßventilen (5) nach der Startphase durch Verdrehen zumindest einer Nockenwelle (6, 7) oder zumindest eines Nockens der Nockenwelle (6, 7) von einer Normalposition für den optimalen Motorbetrieb bei Vollast in eine vorverstellte Position für den optimalen Motorbetrieb bei der jeweiligen Teillast und/oder Drehzahl stufenlos erfolgt.

5. Verfahren nach einem der Ansprüche 1 bis 4, **dadurch gekennzeichnet**, daß die Steuerzeiten in einem Bereich von etwa 0° bis 180° Kurbelwinkel verstellt werden.

6. Verfahren nach einem der Ansprüche 1 bis 5, mit vom Kolben der Brennkraftmaschine gesteuerte Einlaßschlitze (3) zur Realisierung einer Längsspülung, **dadurch gekennzeichnet**, daß die Gruppe der Auslaßventile (5) zwei Untergruppen umfaßt, wobei jede dieser Untergruppen von jeweils einer Nockenwelle (6, 7) betätigt und zumindest ein Auslaßventil(5) in seiner Steuerzeit variiert wird.

7. Verfahren nach Anspruch 6, **dadurch gekennzeichnet**, daß insgesamt vier symmetrisch um die Position einer Einspritzdüse (13) angeordnete Auslaßventile (5) vorgesehen sind, welche paarweise von zwei Nockenwellen (6, 7) betätigt werden.

8. Verfahren nach Anspruch 6 oder 7, **dadurch gekennzeichnet**, daß die Steuerzeiten der beiden Untergruppen von Auslaßventilen (5) durch gleich- oder gegensinniges Verdrehen oder Verschieben von zwei obenliegenden Nockenwellen (6, 7) variiert werden.

9. Verfahren nach einem der Ansprüche 1 bis 5, mit einer Gruppe von Einlaßventilen (14) und einer Gruppe von Auslaßventilen (5), **dadurch gekennzeichnet**, daß zumindest ein Auslaßventil (5) und ein Einlaßventil (14) in seiner Steuerzeit variiert werden.

10. Verfahren nach Anspruch 10, mit zwei Einlaßventilen (14) und zwei Auslaßventilen (5), welche im wesentlichen symmetrisch um die Position einer Einspritzdüse (13) angeordnet sind, **dadurch gekennzeichnet**, daß die Einlaßventile (14) und die Auslaßventile (5) von je einer Nockenwelle (6, 7) betätigt werden.

## Claims

1. Method of exhaust valve control of a two-stroke internal combustion engine with at least one cylinder (1), at least one inlet port or group of inlet ports (3, 14) and at least one camshaftcontrolled exhaust valve or group of exhaust valves (5) per cylinder (1), as well as an exhaust-driven turbo charger (8) for compressing the induction air, the open period of the exhaust valve or group of exhaust valves (5) being advanced depending on load and/or speed of the engine, **characterised in that** the open period of the exhaust valve or the group of exhaust valves (5) is shifted during the starting phase from a normal position for optimum operation of the engine under the prevailing load and/or speed into a starting position in the region of the top dead centre (TDC) for the starting phase, so that in the starting phase the engine acts as a compressor and brings the charger (8) up to its minimum speed necessary for operating the engine, and that after the starting phase the open period is shifted from a normal position for optimum operation of the engine under full load into an advanced position for optimum operation of the invention under the current partial load and/or speed, the magnitude of the advance in degrees of crankshaft angle increasing with the speed.

2. Method according to claim 1, **characterised in that** in operation of the engine the maximum of the advance of the open period of the exhaust valve (5) under the prevailing speed in the partial load range lies at between 1/3 to 2/3 of the full load.

3. Method according to claim 1 or 2, **characterised in that** the shifting of the open period of the exhaust valve or the group of exhaust valves (5) during the starting phase takes place by rotational movement or displacement of at least one camshaft (6, 7) or at least one cam on the camshaft (6, 7) from a normal position for optimum operation of the engine under the prevailing load and/or speed into a starting position for the starting phase.

4. Method according to one of claims 1 to 3, **characterised in that the** shifting of the open periods of the exhaust valve or the group of exhaust valves (5) after the starting phase takes place in a stepless manner by angular movement of at least one camshaft (6, 7) or at least one cam on the camshaft (6, 7) from a normal position for the optimum operation of the invention under full load into an advanced position for the optimum operation of the engine under the prevailing partial load and/or speed.

5. Method according to one of claims 1 to 4, **characterised in that** the open periods are adjusted in a range from about 0° to 180° of crankshaft angle.

6. Method according to one of claims to 5 with inlet ports (3) controlled by the piston of the engine for achieving lengthwise scavenging, **characterised in that** the group of exhaust valves (5) includes two sub-groups, each of these sub-groups being actuated by an associated camshaft (6, 7) and at least one exhaust valve being varied in its open period.

7. Method according to claim 6, **characterised in that** altogether four exhaust valves (5) are provided, arranged symmetrically around the position of an injection nozzle (13) and actuated in pairs by two camshafts (6, 7).

8. Method according to claim 6 or 7, **characterised in that** the open periods of the two sub-groups of exhaust valves (5) are varied by angular movement in the same sense or opposite sense, or by displacement, of two overhead camshafts (6, 7).

9. Method according to one of claims 1 to 5, with one group of inlet valves (14) and one group of exhaust valves (5), **characterised in that** at least one exhaust valve (5) and one inlet valve (14) are varied in their open period.

10. Method according to claim 10, with two inlet valves (14) and two exhaust valves (5) which are arranged substantially symmetrically around the position of an injection nozzle (13) **characterised in that** the inlet valves (14) and the exhaust valves (5) are each actuated by a respective camshaft (6, 7).

## Revendications

1. Procédé de commande de soupape d'échappement d'un moteur à combustion interne à deux temps, comprenant au moins un cylindre (1), au moins un orifice ou groupe d'orifices d'échappement (3, 14) et au moins une soupape ou groupe de soupapes d'échappement (5) par cylindre (1), commandé par l'arbre à cames, ainsi qu'un turbocompresseur (8) de gaz d'échappement pour comprimer l'air aspiré, et, en fonction de la charge et/ou de la vitesse de rotation du moteur à combustion interne, on règle vers l'avance, le temps de commande de la soupape ou du groupe de soupapes d'échappement (5), caractérisé en ce que le temps de commande de la soupape ou du groupe de soupapes d'échappement (5) pendant la phase de démarrage est réglé d'une position normale de fonctionnement optimum du moteur, pour la charge et/ou la vitesse de rotation respectives, à une position de démarrage au voisinage du point mort haut (OT), de façon qu'en phase de démarrage le moteur à combustion interne fonctionne comme compresseur et fait passer le turbocompresseur (8) à la vitesse de rotation minimale nécessaire au fonctionnement du moteur, et en ce qu'après la phase de démarrage on règle le temps de commande pour passer d'une position normale de fonctionnement optimum du moteur en pleine charge, à une position d'avance pour le fonctionnement optimum du moteur pour la charge partielle et/ou la vitesse de rotation respectives, l'importance de l'avance du réglage augmentant en degré d'angle de vilebrequin, en fonction de la vitesse de rotation.

2. Procédé selon la revendication, caractérisé en ce qu'en fonctionnement du moteur, le maximum du réglage de l'avance du temps de commande de la soupape d'échappement (5) se situe, à la vitesse de rotation respective, dans la plage de charge partielle comprise entre 1/3 jusqu'à 2/3 de la charge maximale.

3. Procédé selon la revendication 1 ou 2, caractérisé en ce que le réglage du temps de commande de la soupape ou du groupe de soupapes d'échappement (5) pendant la phase de démarrage se fait par rotation ou décalage d'au moins un arbre à cames (6, 7) ou d'au moins une came de l'arbre à cames (6, 7) passant d'une position normale de fonctionnement optimum du moteur pour la charge et/ou la vitesse de rotation respectives, à une position de démarrage pour la phase de démarrage.

4. Procédé selon l'une des revendications 1 à 3, caractérisé en ce que le réglage des temps de commande de la soupape ou du groupe de soupapes d'échappement (5) après la phase de démarrage, se fait par rotation d'au moins un arbre à cames (6, 7) ou d'au moins une came de l'arbre à cames (6, 7) passant d'une position normale de fonctionnement optimum du moteur pour la charge maximale, à une position d'avance pour le fonctionnement optimum du moteur pour la charge partielle et/ou la vitesse de rotation respectives, suivant un réglage en continu.

5. Procédé selon l'une des revendications 1 à 4, caractérisé en ce qu'on règle les temps de commande dans une plage d'angles de vilebrequin comprise entre 0° et 180°.

6. Procédé selon l'une des revendications 1 à 5, pour des fentes d'admission (3) commandées par le piston du moteur à combustion interne, pour réaliser un balayage longitudinal, caractérisé en ce que le groupe de soupapes d'échappement (5) comprend deux sous-groupes et chacun des sous-groupes est commandé par un arbre à cames (6, 7) respectif, et l'on modifie le temps de commande d'au moins une soupape d'échappement (5).

7. Procédé selon la revendication 6, caractérisé par en tout quatre soupapes d'échappement (5) réparties symétriquement autour de la position d'un injecteur (13), ces soupapes étant actionnées par paire par deux arbres à cames (6, 7).

8. Procédé selon la revendication 6 ou 7, caractérisé en ce que les temps de commande des deux sous-groupes de soupape d'échappement (5) sont modifiés par rotation ou coulissement dans le même sens ou en sens opposés, de deux arbres à cames (6, 7) en tête.

9. Procédé selon l'une des revendications 1 à 5 pour un groupe de soupapes d'admission (14) et un groupe de soupapes d'échappement (5), caractérisé en ce que le temps de commande d'au moins une soupape d'échappement (5) et d'au moins une soupape d'admission (14) est variable.

10. Procédé selon la revendication 9 pour deux soupapes d'admission (14) et deux soupapes d'échappement (5) disposées de manière essentiellement symétrique autour de la position d'un injecteur (13), caractérisé en ce que les soupapes d'admission (14) et les soupapes d'échappement (5) sont commandées chaque fois par un arbre à cames (6, 7).
